# EUROPEAN PATENT APPLICATION

(11) **EP 4 599 942 A1**
(43) Date of publication of application: **13.08.2025**
(21) Application number: 23874593.9
(22) Date of filing: 06.09.2023
(51) Int. Cl.: B05C 5/00, B05C 11/10, B05D 1/26, B41J 2/06

(54) **LIQUID DROPLET EJECTION DEVICE, LIQUID DROPLET EJECTION NOZZLE HEAD, AND LIQUID DROPLET EJECTION METHOD**

(30) Priority: 05.10.2022 JP 2022160959
(71) Applicant: SIJTechnology, Inc., Tsukuba-shi, Ibaraki 305-0817 (JP)
(72) Inventor: MURATA Kazuhiro, Tsukuba-shi, Ibaraki 305-0817 (JP)
(74) Representative: Stolmár & Partner Patentanwälte PartG mbB
(86) International application number: PCT/JP2023/032501
(87) International publication number: WO 2024/075464

(57) **Abstract**

A liquid droplet ejection device according to an embodiment of the present invention an object holding unit for holding an object; a first liquid droplet ejection unit having a plurality of first liquid droplet ejection nozzles configured to eject first droplets onto the object, the first liquid droplet ejection nozzle is an electrostatic ejection type nozzle; a second liquid droplet ejection unit having at least one second liquid droplet ejection nozzle configured to eject second droplets including a material different from the first droplet; and a control unit configured to control a relative positional relationship between the second liquid droplet ejection nozzle and the first liquid droplet ejection nozzle, wherein the second liquid droplet ejection unit blocks at least one first liquid droplet ejection nozzle among the plurality of first liquid droplet ejection nozzles by ejecting the second droplets.

## Description

### TECHNICAL FIELD

The present invention relates to a liquid droplet ejection device, a liquid droplet ejection nozzle head, and a liquid droplet ejection method.

### BACKGROUND ART

In recent years, the application of inkjet printing technology to industrial processes has been carried out. For example, a color filter manufacturing process for a liquid crystal display is an example. Conventionally, although a so-called piezo type head that ejects liquid droplets by mechanical pressure or vibration has been widely used as an inkjet printing technique, an electrostatic ejection type inkjet head that can eject finer liquid droplets has attracted attention. Patent Literature 1 discloses an electrostatic ejection type inkjet recording device.

### CITATION LIST

### PATENT LITERATURE

Patent Literature 1: Laid-Open Patent Publication No. H10-34967

### SUMMARY OF INVENTION

### TECHNICAL PROBLEM

Recently, from the viewpoint of improving productivity while taking advantage of the characteristics of an electrostatic ejection type inkjet head capable of ejecting fine droplets, the development of a simultaneous ejection type multi-nozzle head has been advanced. In the case of a simultaneous ejection type multi-nozzle head, the arrangement of nozzles can be voluntarily designed. However, in the case of such a multi-nozzle head, there is still a problem that only a pattern of a predetermined nozzle arrangement is formed. In order to form an ejection pattern different from a predetermined pattern, it is necessary to prepare a multi-nozzle head having a new nozzle arrangement separately. In this case, a new problem arises in that extra time is required for setup due to the replacement of the multi-nozzle head. On the other hand, in the case of a piezo type multi-nozzle head having a fixed pitch which already exists, (1) in addition to a problem that it is difficult to reduce the initial ejection amount, (2) there is a problem that ink ejection to a position different from the nozzle pitch requires raster scanning rather than simultaneous ejection. Therefore, there is a limit of the scan speed in the formation time of the pattern.

Therefore, an object of the present invention is to provide a liquid droplet ejection device capable of changing an ejection pattern using a multi-nozzle head.

### SOLUTION TO PROBLEM

According to an embodiment of the present invention, there is provided a liquid droplet ejection device, including an object holding unit for holding an object; a first liquid droplet ejection unit having a plurality of first liquid droplet ejection nozzles configured to eject first droplets onto the object, the first liquid droplet ejection nozzle is an electrostatic ejection type nozzle; a second liquid droplet ejection unit having at least one second liquid droplet ejection nozzle configured to eject second droplets including a material different from the first droplet; and a control unit configured to control a relative positional relationship between the second liquid droplet ejection nozzle and the first liquid droplet ejection nozzle, wherein the second liquid droplet ejection unit blocks at least one first liquid droplet ejection nozzle among the plurality of first liquid droplet ejection nozzles by ejecting the second droplets.

In the liquid droplet ejection device, the first droplet may include a polar solvent, and the second droplet may include a non-polar solvent.

In the liquid droplet ejection device, when the first liquid droplet ejection unit ejects the first liquid droplet, the second droplet which blocks the first electrostatic ejection type nozzle may be in contact with a first liquid which is supplied from an ink tank, and is ejected as the first droplet.

In the liquid droplet ejection device, the second liquid droplet may be a resist.

In the liquid droplet ejection device, the second liquid droplet ejection nozzle may be a piezoelectric nozzle.

The liquid droplet ejection device may further include an inspection unit configured to inspect an opening state of the first liquid droplet ejection nozzle.

According to an embodiment of the present invention, there is provided a liquid droplet ejection nozzle head, including: a plurality of electrostatic ejection type nozzles arranged at equal intervals and having the same shape, wherein at least one first electrostatic ejection type nozzle among the plurality of electrostatic ejection type nozzles is blocked by a blocking material.

In the droplet ejection nozzle head, the first electrostatic ejection type nozzle may be arranged between two second electrostatic ejection type nozzles which are not blocked among the plurality of electrostatic ejection type nozzles.

In the liquid droplet ejection nozzle head, the blocking material may include a non-polar solvent.

In the liquid droplet ejection nozzle head, the blocking material may be a resist.

In the liquid droplet ejection nozzle head, the blocking material may be a magnetic material.

According to an embodiment of the present invention, there is provided a liquid droplet ejection method, the method including blocking a first liquid droplet ejection nozzle arranged in a first region of a multi-nozzle head including a plurality of first liquid droplet ejection nozzles; and ejecting first droplets from a first liquid droplet ejection nozzle arranged in a second region different from the first region of the plurality of first liquid droplet ejection nozzles to an object, wherein the first liquid droplet ejection nozzle is an electrostatic ejection type nozzle.

The liquid droplet ejection method may further include using the second liquid droplet to block the first liquid droplet discharge nozzle provided in the first region among the plurality of first liquid droplet discharge nozzles by ejecting a second droplet from a second liquid droplet ejection nozzle.

In the liquid droplet ejection method, the second liquid droplet may include a non-polar solvent.

In the liquid droplet ejection method, the second liquid droplet may be a resist.

In the liquid droplet ejection method, the second droplet may be removed when the first liquid droplet ejection nozzle blocked by the second droplet is heated to a predetermined temperature or higher.

In the liquid droplet ejection method, the second liquid droplet ejection nozzle may be a piezoelectric nozzle.

In the liquid droplet ejection method, the first liquid droplet ejection nozzle arranged in the first region may be blocked by using a solid material.

In the liquid droplet ejection method, the solid material may be a magnetic material.

In the liquid droplet ejection method, the solid material may be removed by bringing the magnet closer to the blocked first liquid droplet ejection nozzle.

### ADVANTAGEOUS EFFECTS OF INVENTION

It is possible to provide a liquid droplet ejection device capable of changing an ejection pattern by using a multi-nozzle head by using an embodiment of the present invention.

### BRIEF DESCRIPTION OF DRAWINGS

FIG. 1 is a schematic diagram of a liquid droplet ejection device according to an embodiment of the present invention.
FIG. 2 is a plan view of a multi-nozzle head according to an embodiment of the present invention.
FIG. 3 is a perspective view of a liquid droplet ejection nozzle according to an embodiment of the present invention.
FIG. 4A is a plan view of a liquid droplet ejection nozzle according to an embodiment of the present disclosure.
FIG. 4B is a cross-sectional view of a liquid droplet ejection nozzle according to an embodiment of the present disclosure.
FIG. 5A is a plan view of a multi-nozzle according to an embodiment of the present disclosure.
FIG. 5B is a cross-sectional view of a multi-nozzle according to an embodiment of the present disclosure.
FIG. 6 is a schematic diagram showing a liquid droplet ejection method according to an embodiment of the present invention.
FIG. 7 is a schematic diagram showing a liquid droplet ejection method according to an embodiment of the present invention.
FIG. 8 is a schematic diagram showing a liquid droplet ejection method according to an embodiment of the present invention.
FIG. 9 is a schematic diagram showing a liquid droplet ejection method according to an embodiment of the present invention.
FIG. 10 is a plan view of a multi-nozzle head according to an embodiment of the present invention.
FIG. 11 is a schematic diagram of a liquid droplet ejection device according to an embodiment of the present invention.
FIG. 12 is a schematic plan view of the formed pattern.
FIG. 13 is a schematic diagram of a liquid droplet ejection device according to an embodiment of the present invention.
FIG. 14 is a schematic diagram of a liquid droplet ejection device according to an embodiment of the present invention.

### DESCRIPTION OF EMBODIMENTS

Hereinafter, embodiments of an invention disclosed in the present application will be described with reference to the drawings. However, the present invention can be implemented in various forms without departing from the gist thereof, and is not to be construed as being limited to the description of the embodiments exemplified below.

In addition, in the drawings referred to in the present embodiment, the same or similar parts are denoted by the same reference signs or similar reference signs (only denoted by A, B, -1, -2, or the like after the numerals), and repeated description thereof may be omitted. In addition, the dimensional ratios in the drawings may be different from actual ratios for convenience of explanation, or a part of the configuration may be omitted from the drawings.

Furthermore, in the detailed description of the present invention, when defining a positional relationship between one component and another component, "above" and "below" include not only the case where the component is located directly above or directly below, but also the case where another component is interposed therebetween unless otherwise specified.

### [First Embodiment]

### [1-1. Configuration of Liquid Droplet Ejection Device 100]

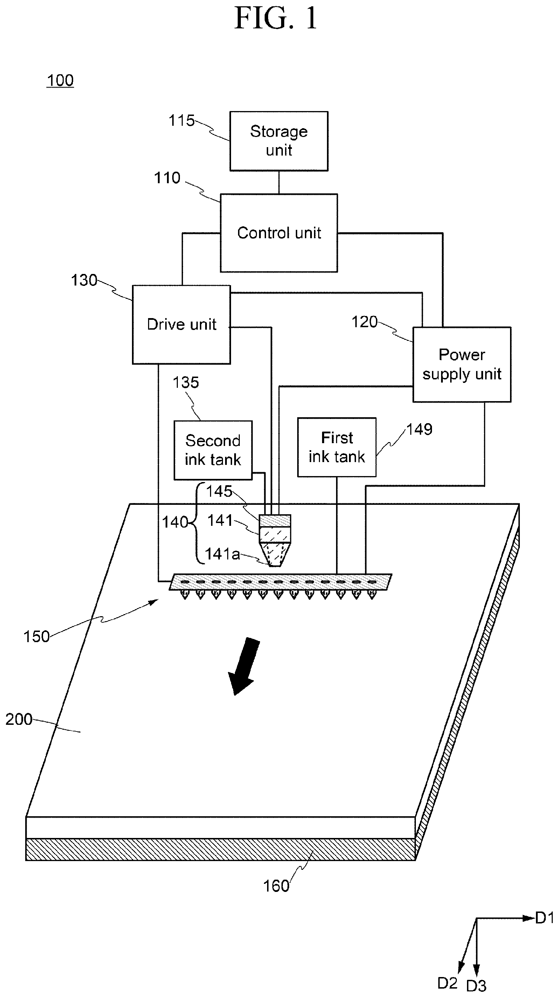

FIG. 1 is a schematic diagram of a liquid droplet ejection device 100 according to an embodiment of the present invention.

The liquid droplet ejection device 100 includes a control unit 110, a storage unit 115, a power supply unit 120, a drive unit 130, a second ink tank 135, a second liquid droplet ejection unit 140, a first ink tank 149, a first liquid droplet ejection unit 150, and an object holding unit 160.

The control unit 110 includes a CPU (Central Processing Unit), an ASIC (Application Specific Integrated Circuit), an FPGA (Field Programable Gate Array), or another arithmetic processor. The control unit 110 controls ejection processing of the second liquid droplet ejection unit 140 and the first liquid droplet ejection unit 150 by using a predetermined droplet ejection program.

The storage unit 115 has a function as a database for storing the droplet ejection program and various kinds of information used in the droplet ejection program. As the storage unit 115, memories, SSD, or elements capable of storing data are used.

The power supply unit 120 is connected to the control unit 110, the storage unit 115, the drive unit 130, the second ink tank 135, the second liquid droplet ejection unit 140, the first liquid droplet ejection unit 150, and the object holding unit 160. The power supply unit 120 applies a voltage to the second liquid droplet ejection unit 140 and the first liquid droplet ejection unit 150 based on a signal input from the control unit 110. In this example, the power supply unit 120 applies a pulsed voltage to the second liquid droplet ejection unit 140 and the first liquid droplet ejection unit 150. In addition, the voltage is not limited to the pulse voltage, and a constant voltage may be constantly applied to the second liquid droplet ejection unit 140 and the first liquid droplet ejection unit 150. A liquid which becomes a second droplet 147 is provided from the second ink tank 135 to the second liquid droplet ejection unit 140. The second droplet 147 is ejected in a direction (third direction D3) of an object 200 from a tip 141a of a second liquid droplet ejection nozzle 141, which will be described later, by the voltage applied from the power supply unit 120 to the second liquid droplet ejection unit 140. A liquid which becomes a first droplet 157 is provided from the first ink tank 149 to the first liquid droplet ejection unit 150. The first droplet 157 is ejected from a first liquid droplet ejection nozzle 153 (a tip 153a) provided in a first liquid droplet ejection unit 150 (a multi-nozzle head 151 to be described later) in the direction (third direction D3) of the object 200 by the voltage applied from the power supply unit 120 to the first liquid droplet ejection unit 150.

The drive unit 130 is composed of drive members such as a motor, a belt, and a gear. The drive unit 130 moves the second liquid droplet ejection unit 140 (the second liquid droplet ejection nozzle 141) and the first liquid droplet ejection unit 150 (more specifically, the multi-nozzle head 151) relatively (in this embodiment, a second direction D2) with respect to the object holding unit 160 based on an instruction from the control unit 110. Thus, the drive unit 130 can control a relative positional relationship between the object 200 and the multi-nozzle head 151 (the first liquid droplet ejection nozzle 153) and a relative positional relationship between the second liquid droplet ejection nozzle 141 and the multi-nozzle head 151 (the first liquid droplet ejection nozzle 153) when using the device (during droplet ejection). The drive unit 130 may be used in combination with a goniometer stage to finely adjust the second liquid droplet ejection nozzle 141 and the multi-nozzle head 151 (the first liquid droplet ejection nozzle 153).

The object holding unit 160 has a function of holding the object 200. In this example, a stage is used as the object holding unit 160. A mechanism by which the object holding unit 160 holds the object 200 is not particularly limited, and a general holding mechanism is used. In this example, the object 200 is vacuum-attracted to the object holding unit 160. In addition, the present invention is not limited to this, and the object holding unit 160 may hold the object 200 using a fixture.

The object 200 is a member from which droplets ejected from the first droplet ejection unit 150 are ejected. In this example, a glass plate is used for the object 200. However, the object 200 is not limited to a glass plate. For example, the object 200 may be a metal plate or an organic resin member. Further, a metal wiring or an organic resin member may be formed on the object 200. In addition, the object 200 may be provided with a counter electrode for ejecting droplets. In this case, a GND potential may be applied to the object 200.

### [1-2. Configuration of Second Droplet Ejection Unit 140]

The second liquid droplet ejection unit 140 is arranged above the object 200 (the object holding unit 160) and the first liquid droplet ejection unit 150 by the drive unit 130 when the first liquid droplet ejection nozzle 153 of the first liquid droplet ejection unit 150 (more specifically, the multi-nozzle head 151) is blocked. The second liquid droplet ejection unit 140 includes the second liquid droplet ejection nozzle 141 and a piezoelectric element 145 for ejecting droplets (second droplets 147). In this example, a piezo inkjet nozzle is used as the second liquid droplet ejection nozzle 141. Although the piezoelectric element 145 is arranged above the second liquid droplet ejection nozzle 141, the arrangement of the piezoelectric element 145 may be changed as appropriate. The piezoelectric element 145 is electrically connected to the power supply unit 120. The piezoelectric element 145 presses liquid supplied from the second ink tank 135 by the voltage applied from the power supply unit 120, thereby ejecting the second liquid droplet 147 from the tip 141a (also referred to as a first tip) of the second liquid droplet ejection nozzle 141.

### [1-3. Configuration of First Droplet Ejection Unit 150]

The first liquid droplet ejection unit 150 is arranged above the object 200 (the object holding unit 160) by the drive unit 130 when the first droplet 157 is ejected. The first liquid droplet ejection unit 150 may be partially connected to the second liquid droplet ejection unit 140. The first liquid droplet ejection unit 150 includes the multi-nozzle head 151.

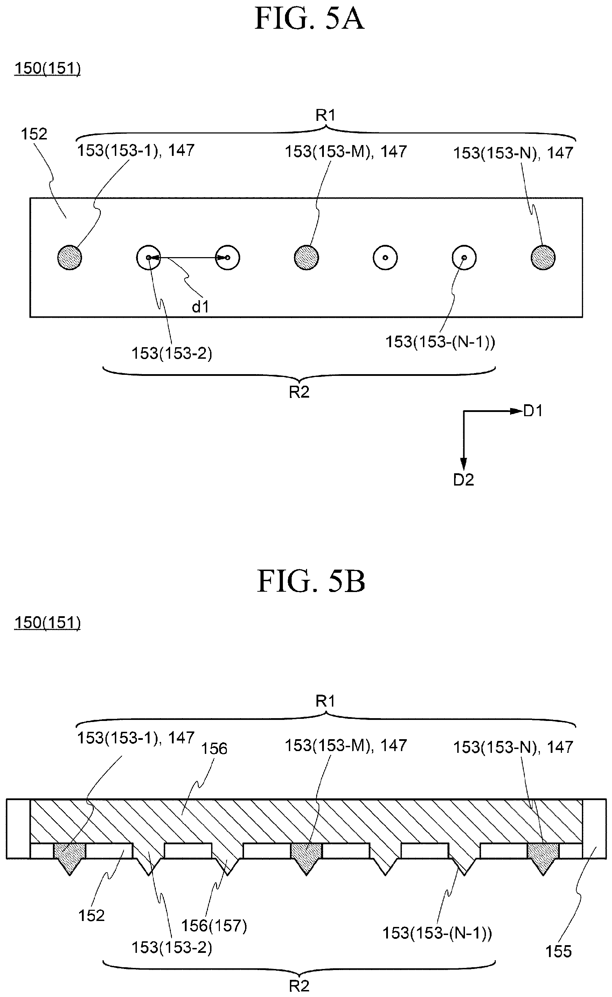

The multi-nozzle head 151 is fixed to a fixture 155 (see FIG. 5B) such as a mount and an attachment. The multi-nozzle head 151 is provided with a plurality of first liquid droplet ejection nozzles 153 for ejecting droplets (first droplets 157). The liquid ejected as the first droplet 157 is provided from the first ink tank 149 connected to the first liquid droplet ejection unit 150. An electrostatic ejection type inkjet nozzle is used as the first liquid droplet ejection nozzle 153. Details of the multi-nozzle head 151 will be described in detail below.

### [1-4. Configuration of Multi-Nozzle Head 151]

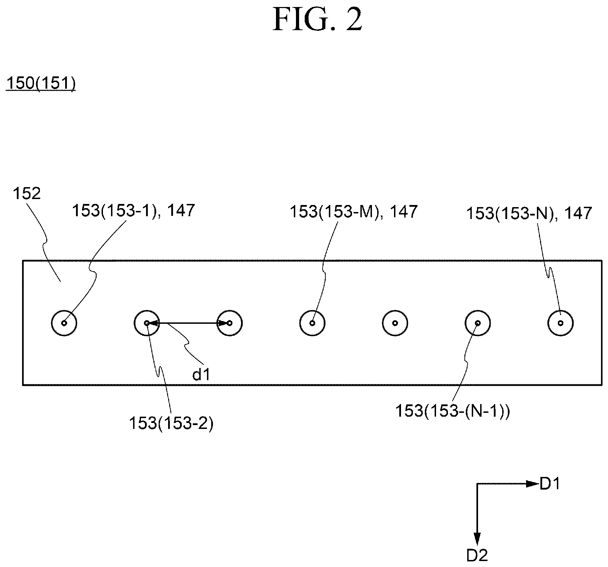

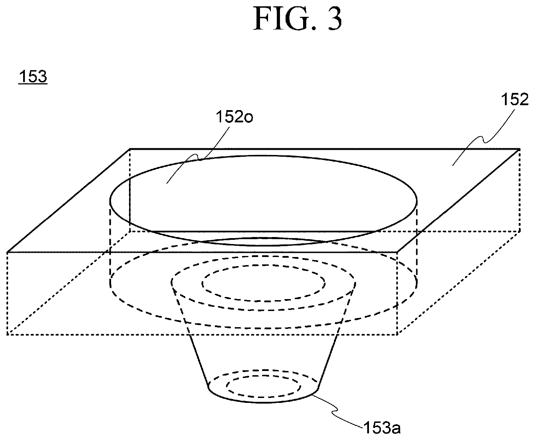

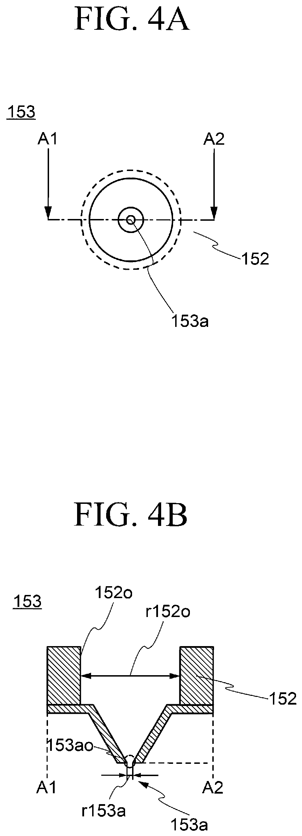

FIG. 2 is a plan view of the multi-nozzle head 151. FIG. 3 is a perspective view of the first liquid droplet ejection nozzle 153. FIG. 4A is a plan view of the liquid droplet ejection nozzle 153. FIG. 4B is a cross-sectional view of the first liquid droplet ejection nozzle 153 between A1 and A2.

As shown in FIG. 2, the multi-nozzle head 151 includes a plate unit 152 and the first liquid droplet ejection nozzles 153.

The plate unit 152 is provided in a plate shape. In this example, the plate unit 152 extends in a first direction D1. Although a metal material such as nickel, copper, or stainless steel is used for the plate unit 152, the material of the plate unit 152 may be appropriately changed as long as the material is used when a potential is applied. A thickness of the plate unit 152 is appropriately set. In this example, the thickness of the plate unit 152 is 10 µm or more and 100 µm or less.

As shown in FIG. 3, FIG. 4A, and FIG. 4B, the first liquid droplet ejection nozzle 153 is connected to one surface (lower surface) of the plate unit 152 at an upper portion of the first liquid droplet ejection nozzle 153. The multi-nozzle head 151 includes the plurality of first liquid droplet ejection nozzles 153. The first liquid droplet ejection nozzles 153 are arranged side by side in the first direction D1. In the present embodiment, the first liquid droplet ejection nozzles 153-1, 153-2, ..., 153-M, ..., 153-(N-1) and 153-N are arranged in the plate unit 152 as shown in FIG. 2. N is a natural number greater than or equal to 3, and M is a natural number between 1 and N. In addition, in the case where the first liquid droplet ejection nozzles 153-1, 153-2, ..., 153-M, ..., 153-(N-1) and 153-N need not be separately described, the first liquid droplet ejection nozzles will be described as the first liquid droplet ejection nozzle 153. Although a metal material such as nickel, copper, or the like is used for the first liquid droplet ejection nozzle 153, the material of the first liquid droplet ejection nozzle 153 may be appropriately changed as long as the material is capable of applying a potential. The first liquid droplet ejection nozzle 153 has a tapered shape. In this example, a distance d1 between neighboring first liquid droplet ejection nozzles 153 (a distance between the first liquid droplet ejection nozzles 153-1 and the first liquid droplet ejection nozzles 153-2) is 200 µm. Each of the first liquid droplet ejection nozzles 153 has the same shape and is arranged at equal intervals.

The plate unit 152 has a through hole 152o having an inner diameter r152o (also referred to as a third inner diameter) larger than an inner diameter r153a (also referred to as a second inner diameter) of an ejection port of the first liquid droplet ejection nozzle 153 (an opening 153ao on the tip 153a of the first liquid droplet ejection nozzle 153) at a portion corresponding to (a portion that overlaps) the first liquid droplet ejection nozzle 153. The inner diameter of the through hole 152o of the plate unit 152 may be 1 µm or more and 100 µm or less. The inner diameter of the tip 153a of the first liquid droplet ejection nozzle 153 may be several hundred nm or more and 50 µm or less, preferably 1 µm or more and 30 µm or less, and more preferably 5 µm or more and 20 µm or less.

In the present embodiment, a voltage may be applied to the first liquid droplet ejection nozzle 153, a voltage may be applied to the plate unit 152, or a voltage may be applied to the ink stored in the first liquid droplet ejection nozzle 153. In the case where a voltage is applied to the plate unit 152 and the first liquid droplet ejection nozzle 153, an electrode may be provided. The electrode may be provided with tungsten, nickel, molybdenum, titanium, gold, silver, copper, platinum, or the like. In this case, a plurality of electrodes may be provided so that the voltage is uniformly applied to the entire plate unit 152. Further, in the present embodiment, although an example in which a voltage is applied to the first liquid droplet ejection nozzle 153, the plate unit 152, or the ink has been described, a voltage may be applied to the fixture 155 (for example, a mount or an attachment) that holds the multi-nozzle head 151.

The inner diameter r153a (the second inner diameter) of the ejection port (the tip 153a) of the first liquid droplet ejection nozzle 153 may be smaller than an inner diameter (also referred to as a first inner diameter) of an ejection port (the tip 141a) of the second liquid droplet ejection nozzle 141. In this case, an ejection amount per unit time of the first liquid droplet ejection nozzle 153 is smaller than an ejection amount per unit time of the second liquid droplet ejection nozzle 141.

FIG. 5A is a plan view of the multi-nozzle head 151 with a portion of the multi-nozzle head 151 blocked. FIG. 5B is a cross-sectional view of a multi-nozzle head 151 with a portion of the multi-nozzle head 151 blocked. As shown in FIG. 5A and FIG. 5B, in the present embodiment, in order to form a predetermined pattern by using the multi-nozzle head 151, the first liquid droplet ejection nozzle 153 arranged in a partial area of the multi-nozzle head 151 is blocked by a blocking material. In this embodiment, a region where the first droplet 157 cannot be ejected (also referred to as a first region R1) and a region where the first droplet can be ejected (also referred to as a second region R2) are provided in the multi-nozzle head 151. Specifically, as shown in FIG. 2, the first liquid droplet ejection nozzles 153 (in this example, the first liquid droplet ejection nozzles 153-1, 153-M, and 153-N) provided in the first area R1 are blocked by the second droplet 147 ejected from the second liquid droplet ejection nozzle 141. The first liquid droplet ejection nozzle 153-M is arranged between two first liquid droplet ejection nozzles 153 that are not blocked. The position of the first liquid droplet ejection nozzle 153 to be blocked is not limited to an end portion, and may be appropriately changed to form a predetermined ejection pattern.

The second droplet 147 includes a different material than the first droplet 157. In the present embodiment, a polar solvent is used for the first droplet 157 in order to perform electrostatic ejection. With respect to the second droplet 147, a non-polar solvent (for example, a hydrocarbon such as tetradecane) is used.

Further, as shown in FIG. 5A and FIG. 5B, in the case where the first droplet 157 is ejected from the multi-nozzle head 151, an upper portion of the multi-nozzle head 151 is filled with a liquid (ink) 156 that is supplied from the first ink tank 149 and ejected as the first droplet 157. In this case, the liquid 156 and the second droplet 147 may be in contact with the multi-nozzle head 151 in a region surrounded by the fixture 155.

Further, in the present embodiment, at the time of forming the blocked pattern, the second liquid droplet ejection unit 140 (the second liquid droplet ejection nozzle 141) moves above the first liquid droplet ejection unit 150 (the multi-nozzle head 151) by the control unit 110 and the drive unit 130. That is, in the present embodiment, by controlling the relative positional relationship between the second liquid droplet ejection nozzle 141 and the multi-nozzle head 151 including the plurality of first liquid droplet ejection nozzles 153, the second droplet 147 can be ejected to a predetermined position of the multi-nozzle head 151.

### [1-5. Liquid Droplet Ejection Method]

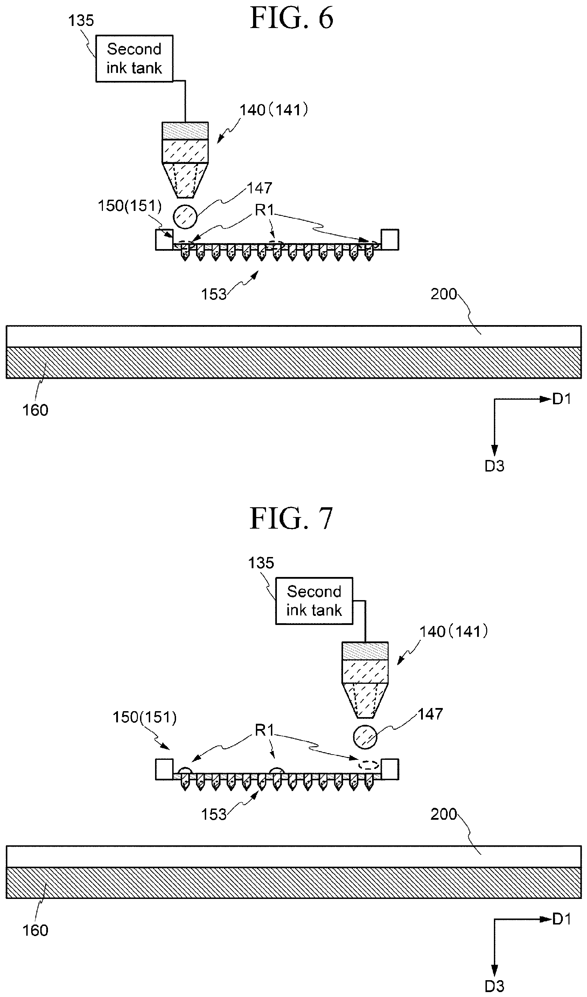

Next, a liquid droplet ejection method according to the present embodiment will be described. FIG. 6 to FIG. 9 are schematic diagrams showing a liquid droplet ejection method.

First, the second liquid droplet ejection unit 140 is moved to a predetermined position (first area R1) in the first direction D1 by the control unit 110 and the drive unit 130. The first region R1 is a region of the multi-nozzle head 151 where the first droplet 157 is not ejected. The second liquid droplet ejection unit 140 (the second liquid droplet ejection nozzle 141) is arranged at a predetermined position on the multi-nozzle head 151 in the first liquid droplet ejection unit 150. In this example, the second liquid droplet ejection unit 140, the second liquid droplet ejection nozzle 141, and the multi-nozzle head 151 are arranged above the object 200. Next, as shown in FIG. 6, the second liquid droplet ejection nozzle 141 ejects the liquid held in the second ink tank 135 as the second droplet 147 in the third direction D3 (specifically, downward) to a predetermined position above the multi-nozzle head 151 by the voltage applied from the power supply unit 120.

The ejected second droplet 147 is provided to a predetermined first liquid droplet ejection nozzle 153 and stored therein. In this case, a non-polar solvent (for example, a hydrocarbon such as tetradecane) is used for the second droplet. The non-polar solvent has low volatility at room temperature (high boiling point). The non-polar solvent hardly causes charge-up. Therefore, the non-polar solvent is not ejected as a liquid droplet even when a voltage is applied. Therefore, the first liquid droplet ejection nozzle 153 from which the non-polar solvent is ejected is blocked. As shown in FIG. 7, the ejection process of the second droplet 147 is repeated until all the second liquid droplet ejection nozzles 141 arranged in the first area R1 are blocked (a predetermined blocking pattern is formed).

Next, the ink liquid for forming the ejection pattern is supplied from the first ink tank 149 to the multi-nozzle head 151. In this case, the first droplet 157 is provided (stored) to the non-blocked first liquid droplet ejection nozzle 153 of the plurality of first liquid droplet ejection nozzles 153. In the present embodiment, the first liquid droplet ejection nozzle 153 is connected to the plate unit 152 on an upper side. The plate unit 152 has a through hole having an inner diameter larger than that of the first liquid droplet ejection nozzle 153. As a result, it can be said that the first liquid droplet ejection nozzle 153 has a structure in which the second droplet 147 can be easily stored.

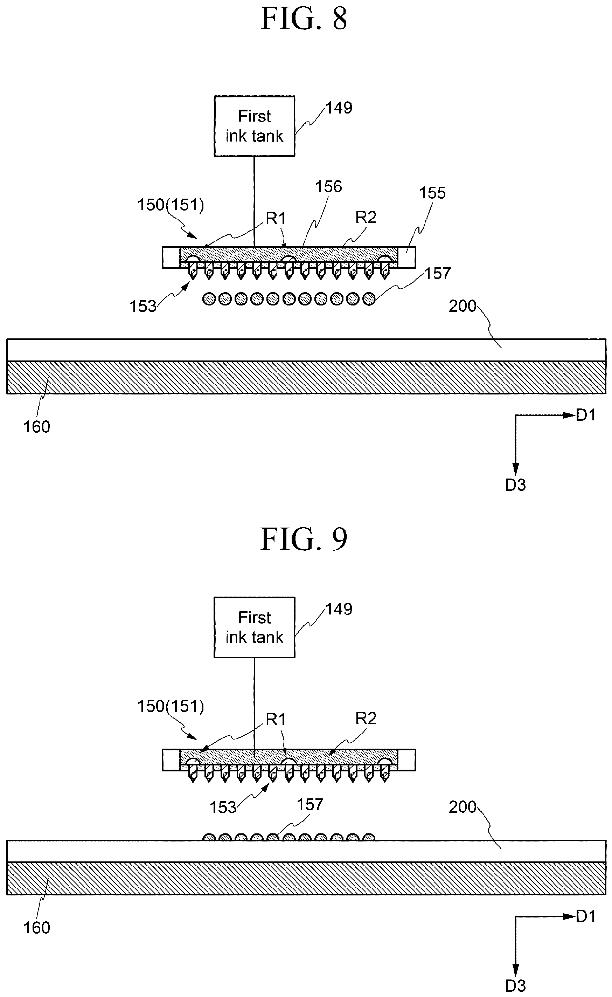

Next, the power supply unit 120 applies a pulsed voltage (in this example, 1000 V with respect to an object (GND potential)) to the first liquid droplet ejection unit 150 (the multi-nozzle head 151) under the control of the control unit 110. As a result, as shown in FIG. 8, the first droplets 157 are simultaneously ejected using the liquid stored in the first ink tank 149 provided in the non-blocked (capable of ejecting) first liquid droplet ejection nozzle 153 arranged in the second region. As a result, as shown in FIG. 9, an ejection pattern by the first droplet 157 is formed on the object 200.

After forming a predetermined pattern on the object 200, the second droplet 147 stored in the blocked first liquid droplet ejection nozzle 153 may be removed when a predetermined condition is satisfied. For example, the blocked first liquid droplet ejection nozzle 153 of the multi-nozzle head 151 may be heated to a predetermined temperature or higher to such an extent that the second droplet 147 volatilizes. As a result, the multi-nozzle head 151 returns to the original state where it is not blocked.

In the present embodiment, the second droplet 147 is ejected at a position where it is not desired to eject a liquid droplet for forming a pattern, so that the first liquid droplet ejection nozzle 153 is blocked. Therefore, in the case where a voltage is applied to the multi-nozzle head 151, the first droplet 157 can be ejected from only the desired first liquid droplet ejection nozzle 153.

Therefore, by using the present embodiment, it is possible to change the ejection pattern by using the multi-nozzle head 151, and it is possible to save time and effort for replacing the multi-nozzle head 151. In addition, in the present embodiment, a pattern can be formed using droplets having a small diameter ejected from the electrostatic ejection nozzle with respect to an object. That is, by using the present embodiment, a desired ejection pattern can be formed with high definition.

### [Second Embodiment]

In the present embodiment, a first liquid droplet ejection unit (multi-nozzle head) different from the first embodiment will be described. Specifically, an example in which the first liquid droplet ejection nozzle is two-dimensionally arranged will be described. In addition, due to the relationship of the description, the members will be omitted as appropriate.

### [2-1. Configuration of Multi-Nozzle Head 151A]

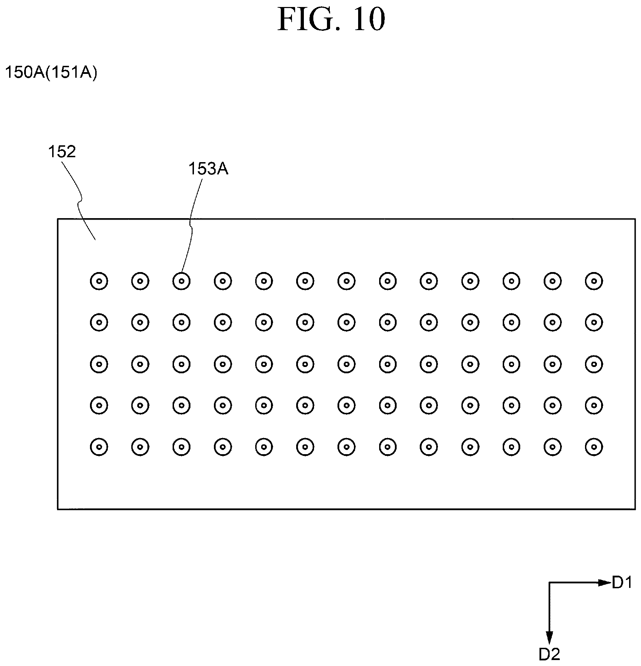

FIG. 10 is a plan view of a multi-nozzle head 151A in a first liquid droplet ejection unit 150A. As shown in FIG. 9, the multi-nozzle head 151A includes the plate unit 152 and a first liquid droplet ejection nozzle 153A.

A plurality of first liquid droplet ejection nozzles 153A is arranged on one surface of the plate unit 152. The first liquid droplet ejection nozzles 153A are arranged at equal intervals in the first direction D1 and the second direction D2 intersecting (in this case, perpendicular to) the first direction D1. In this instance, the multi-nozzle head 151A includes 3 rows × 13 columns = 39 droplet ejection nozzles. The number of the first liquid droplet ejection nozzles 153 can be appropriately changed. For example, The number of the first liquid droplet ejection nozzles 153 may be 4 rows × 100 columns = 400, or 1,000 rows × 1,000 columns = 1,000,000.

In the present embodiment, the first liquid droplet ejection unit 150A is two-dimensionally arranged, and in the case of forming a desired ejection pattern, the second liquid droplet ejection unit 140 is controlled by moving to the position of the first liquid droplet ejection nozzle 153A, which is arranged in a position where it is desired to be blocked, and a size of the droplet is controlled by the first liquid droplet ejection unit 150A.

Therefore, by using the present embodiment, it is possible to change the ejection pattern by using the multi-nozzle head 151, and it is not necessary to replace the multi-nozzle head 151. Further, a desired ejection pattern can be formed with high definition by ejecting droplets using an electrostatic ejection type droplet ejection nozzle.

In the present embodiment, although the first liquid droplet ejection nozzles 153A are arranged at equal intervals in the first direction D1 and the second direction D2, the present disclosure is not limited thereto. For example, the first liquid droplet ejection nozzle 153A may be arranged offset (in a zigzag pattern) in the second direction, or the spacing between adjacent first droplet ejection nozzles 153A may differ.

### [Third Embodiment]

In the present embodiment, a liquid droplet ejection device different from the first and second embodiments will be described. Specifically, an example in which a plurality of second liquid droplet ejection nozzles are provided will be described. In addition, due to the relationship of the description, the members will be omitted as appropriate.

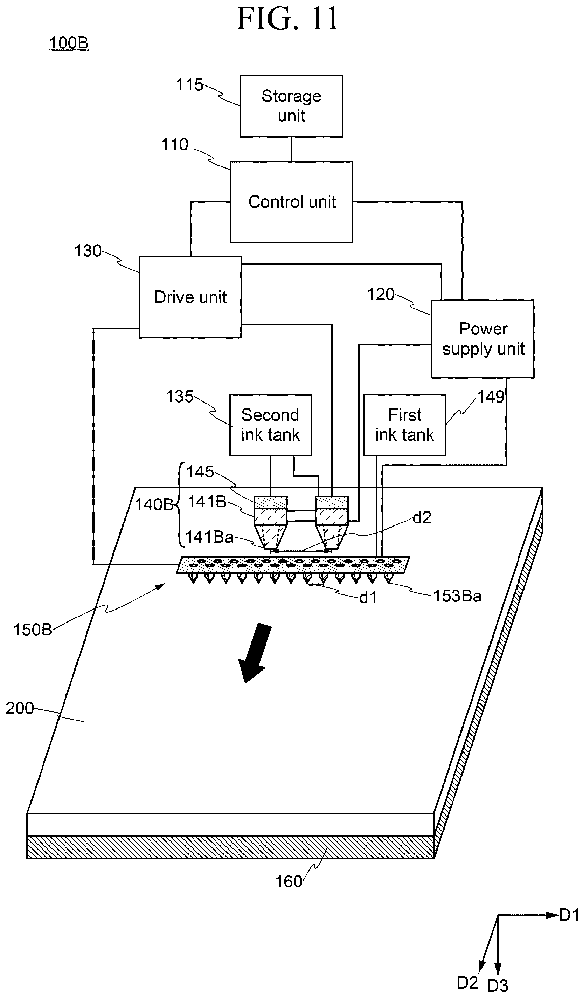

FIG. 11 is a schematic diagram of a liquid droplet ejection device 100B. As shown in FIG. 11, the liquid droplet ejection device 100B includes the control unit 110, the storage unit 115, the power supply unit 120, the drive unit 130, a second liquid droplet ejection unit 140B, a first liquid droplet ejection unit 150B, and the object holding unit 160.

The second liquid droplet ejection unit 140B includes a plurality of second liquid droplet ejection nozzles 141B. In this case, two second liquid droplet ejection nozzles 141B are arranged side by side in the first direction D1. In addition, each of the second liquid droplet ejection nozzles 141B may be controlled to move and eject independently. Further, the second liquid droplet ejection nozzle 141B may be changed as appropriate.

In the present embodiment, a distance d2 between the adjacent second liquid droplet ejection nozzles 141B (more specifically, tips 141Ba of the second liquid droplet ejection nozzles 141B) is larger than a distance d1 between adjacent first liquid droplet ejection nozzles 153B (more specifically, tips 153Ba of the first liquid droplet ejection nozzles 153B).

The first liquid droplet ejection nozzle 153B of the first liquid droplet ejection unit 150B may be arranged in the first direction D1 and the second direction D2, similarly to the first liquid droplet ejection nozzle 153A.

In addition, in the present embodiment, although the example where two second liquid droplet ejection nozzles 141B are arranged side by side in the first direction D1 has been described, the present invention is not limited to this example. Three or more second liquid droplet ejection nozzles 141B may be arranged, and adjacent second liquid droplet ejection nozzles 141B may be arranged in a direction intersecting the first direction D1.

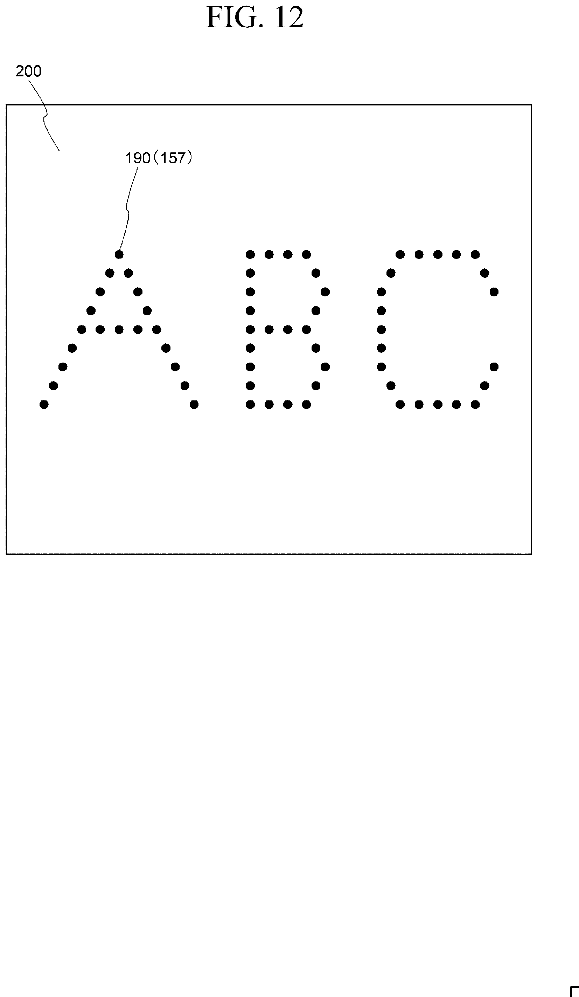

FIG. 12 is a plan view of a pattern formed using the second liquid droplet ejection unit 140B and the first liquid droplet ejection unit 150B. As shown in FIG. 12, a pattern 190 formed by the first droplet 157 is provided on the object 200. In the present embodiment, the second liquid droplet ejection unit 140B and the first liquid droplet ejection unit 150B are combined and used. In this case, the second liquid droplet ejection nozzle 141B of the second liquid droplet ejection unit 140B moves two-dimensionally to a desired position (a position to be blocked) on a multi-nozzle head 151B. By ejecting droplets from each of the second liquid droplet ejection nozzles 141B at once, a complicated desired pattern can be formed in a short time using the multi-nozzle head, and the time and effort of replacing the multi-nozzle head can be eliminated.

In addition, in the present embodiment, the second liquid droplet ejection unit 140B may eject (also referred to as "draw") the second droplet 147 onto the first liquid droplet ejection unit 150B when transporting a substrate and when aligning the substrate.

In the conventional case, the droplet ejection (drawing) process is started after the transfer and alignment operations of the substrate are completed. On the other hand, in the case of the present embodiment, these process times (transfer and alignment of the substrate) can be applied to the ejection process of the second droplet 147. Therefore, it is possible to perform ejection from the first liquid droplet ejection unit 150B at the same time immediately after the alignment of the substrate. As a result, very high-speed drawing is possible.

Therefore, by using the present embodiment, it is possible to form a desired ejection pattern with high definition using an electrostatic ejection type multi-nozzle head, and it is possible to eliminate wasted time and achieve high-speed drawing, as well as form more complex ejection patterns.

### [Fourth Embodiment]

In the present embodiment, a liquid droplet ejection device different from the first to third embodiments will be described. Specifically, a liquid droplet ejection device having an inspection unit will be described. **In** addition, due to the relationship of the description, the members will be omitted as appropriate.

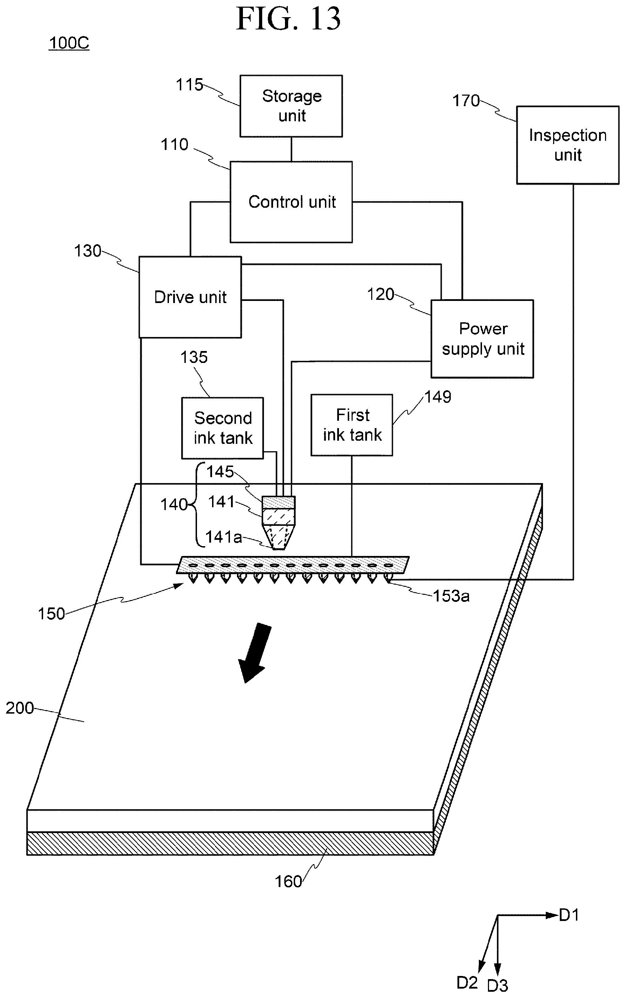

FIG. 13 is a schematic diagram of a liquid droplet ejection device 100C. As shown in FIG. 13, the liquid droplet ejection device 100C includes an inspection unit 170 in addition to the control unit 110, the storage unit 115, the power supply unit 120, the drive unit 130, the second liquid droplet ejection unit 140, the first liquid droplet ejection unit 150, and the object holding unit 160.

The inspection unit 170 may inspect the tip 153a of the first liquid droplet ejection nozzle 153 prior to ejecting the droplet. A CMOS image sensor may be used as the inspection unit 170. A part of the second droplet 147 ejected from the second liquid droplet ejection unit 140 may remain in the first liquid droplet ejection nozzle 153 of the first liquid droplet ejection unit 150. Therefore, if the tip 153a of the first liquid droplet ejection nozzle 153 satisfies a predetermined condition, the first liquid droplet ejection nozzle 153 may be cleaned. In this case, the predetermined condition may be an occlusion rate of the tip 153a of 30% or more. In the case of cleaning the first liquid droplet ejection nozzle 153, an organic solvent such as ethanol or acetone may be used.

By using the present embodiment, it is possible to stably eject the first droplet 157 from the first liquid droplet ejection unit 150.

### [Modification]

Within the scope of the present invention, those skilled in the art can conceive of various modifications and examples, and it is understood that these modifications and examples also fall within the scope of the present invention. For example, the addition, deletion, combination of the various embodiments, or design change of components as appropriate, or addition, omission or changes in conditions of processes by a person skilled in the art based on the embodiments described above are included in the scope of the present invention as long as the gist of the present invention is provided.

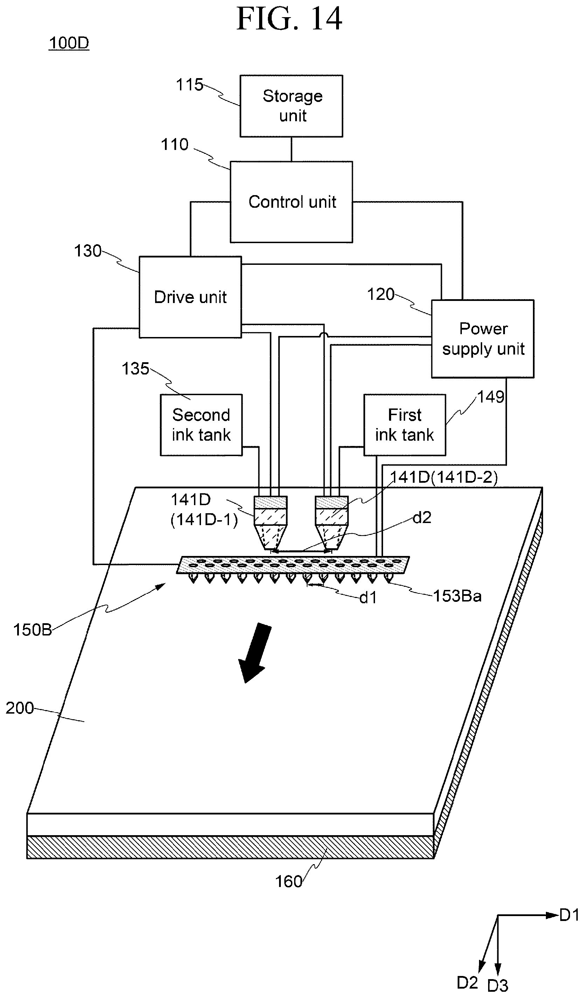

In the first embodiment of the present invention, although an example in which the second liquid droplet ejection unit 140 ejects the second droplet 147 to the first liquid droplet ejection unit 150 has been described, the present invention is not limited thereto. FIG. 14 is a schematic diagram of a liquid droplet ejection device 100D. As shown in FIG. 14, in the case where a plurality of second liquid droplet ejection nozzles 141D (piezoelectric inkjet nozzles) is provided, a liquid (second liquid droplet) for blocking the multi-nozzle head 151 may be ejected from a first piezoelectric inkjet nozzle 141D-1, and a liquid (also referred to as a third liquid droplet) of the same material as the first liquid droplet 157 may be ejected from a second piezoelectric inkjet nozzle 141D-2 to the object 200. As a result, it is possible to form a pattern having a large droplet size together with a high-definition pattern on the object 200.

In the first embodiment of the present invention, although an example in which the plurality of first liquid droplet ejection nozzles 153 simultaneously eject has been described, the present invention is not limited thereto. They may eject sequentially divided into a plurality of times.

In the first embodiment of the present invention, although an example in which a piezoelectric inkjet nozzle is used for the second liquid droplet ejection nozzle 141 has been described, the present invention is not limited thereto. An electrostatic ejection type inkjet nozzle may be used as the second liquid droplet ejection nozzle 141. As a result, several first liquid droplet ejection nozzles 153 of the multi-nozzle head 151 can be blocked with high accuracy.

In the first embodiment of the present invention, although an example has been described in which a part of the plurality of first liquid droplet ejection nozzles 153 is blocked by ejecting the second droplet 147 from the second liquid droplet ejection unit 140, the present invention is not limited thereto. The second liquid droplet ejection unit 140 may not be provided. In this case, a part of the plurality of first liquid droplet ejection nozzles 153 may be manually blocked in advance.

In the first embodiment of the present invention, although an example in which the first liquid droplet ejection nozzle 153 is blocked by using the second droplet 147 as a blocked material has been described, the present invention is not limited thereto. For example, the predetermined first liquid droplet ejection nozzle 153 may be blocked by using a solid material as a blocking material. For example, the first liquid droplet ejection nozzle 153 may be blocked by silica particles. Further, the first liquid droplet ejection nozzle 153 may be blocked by a magnetic material. In this case, after a predetermined pattern is formed by the first droplet, the magnetic material may be collected by a magnet. As a result, the multi-nozzle head 151 can be returned to the original state in which the first liquid droplet ejection nozzle 153 is not blocked.

In the first embodiment of the present invention, although an example in which the first droplet 157 is simultaneously ejected from the first liquid droplet ejection nozzle 153 has been described, the present invention is not limited thereto. The first droplets 157 may be sequentially ejected.

In the first embodiment of the present invention, although an example in which the second liquid droplet ejection nozzle 141 and the multi-nozzle head 151 (the first liquid droplet ejection nozzle 153) are arranged above the object 200, and the second droplet 147 is ejected from the second liquid droplet ejection nozzle 141 to the multi-nozzle head 151 on the object 200 has been described, the present invention is not limited thereto. For example, when the second droplet 147 is ejected, the second liquid droplet ejection nozzle 141 and the multi-nozzle head 151 (the first liquid droplet ejection nozzle 153) may not be arranged above the object 200. Further, when the first droplet 157 is ejected, the second liquid droplet ejection nozzle 141 may not be arranged on the multi-nozzle head 151 (the first liquid droplet ejection nozzle 153) and the object 200. That is, the first droplet 157 may be ejected by using the multi-nozzle head 151 in which the blocking pattern is formed.

In the first embodiment of the present invention, although the example in which the non-polar solvent is used as the second droplet 147 has been described, the present invention is not limited thereto. For example, a resist may be ejected as the second droplet 147. The resist includes a photosensitive material, a resin, an additive, and a solvent. Therefore, after the resist is ejected to the predetermined first liquid droplet ejection nozzle 153, the resist is cured by exposing the resist to light. As a result, the first liquid droplet ejection nozzle 153 is blocked. Further, after forming a predetermined pattern using the first droplet 157 on the object 200, the resist may be removed by a wet process such as a resist stripper or a dry process such as O₂ ashing. As a result, the multi-nozzle head 151 can be returned to the original state in which the first liquid droplet ejection nozzle 153 is not blocked.

Further, in the first embodiment of the present invention, although the example in which the non-polar solvent is ejected as the second droplet 147 has been described, the present invention is not limited thereto. The second droplet may be a polar solvent including bubbles. The inclusion of bubbles limits the ejection of droplets.

In the first embodiment of the present invention, although an example in which the second liquid droplet ejection unit 140 and the first liquid droplet ejection unit 150 are provided in one device has been described, the present invention is not limited thereto. The second liquid droplet ejection unit may be provided in another device. In this case, the liquid droplet ejection device 100 includes only the first liquid droplet ejection unit 150.

### REFERENCES SIGNS LIST

100: liquid droplet ejection device, 110: control unit, 115: storage unit, 120: power supply unit, 130: drive unit, 135: second ink tank, 140: second liquid droplet ejection unit, 141: second liquid droplet ejection nozzle, 141a: tip, 145: piezoelectric element, 147: second droplet, 149: first ink tank, 150: first liquid droplet ejection unit, 151: multi-nozzle head, 152: plate unit, 153: first liquid droplet ejection nozzle, 153a: tip, 153ao: opening, 157: first droplet, 160: object holding unit, 170: inspection unit, 190: pattern, 200: object

## Claims

1. A liquid droplet ejection device, comprising:
an object holding unit for holding an object;
a first liquid droplet ejection unit having a plurality of first liquid droplet ejection nozzles configured to eject first droplets onto the object, the first liquid droplet ejection nozzles are electrostatic ejection type nozzles;
a second liquid droplet ejection unit having at least one second liquid droplet ejection nozzle configured to eject second droplets including a material different from the first droplet; and
a control unit configured to control a relative positional relationship between the second liquid droplet ejection nozzle and the first liquid droplet ejection nozzle, wherein
the second liquid droplet ejection unit blocks at least one first liquid droplet ejection nozzle among the plurality of first liquid droplet ejection nozzles by ejecting the second droplets.

2. The liquid droplet ejection device according to claim 1, wherein
the first droplet includes a polar solvent, and
the second droplet includes a non-polar solvent.

3. The liquid droplet ejection device according to claim 2, wherein
when the first liquid droplet ejection unit ejects the first droplet, the second droplet which blocks the first electrostatic ejection type nozzle is in contact with a first liquid which is supplied from an ink tank, and is ejected as the first droplet.

4. The liquid droplet ejection device according to claim 1, wherein
the second droplet is a resist.

5. The liquid droplet ejection device according to any one of claims 1 to 4, wherein
the second liquid droplet ejection nozzle is a piezoelectric nozzle.

6. The liquid droplet ejection device according to claim 5, further comprising:
an inspection unit configured to inspect an opening state of the first liquid droplet ejection nozzle.

7. A liquid droplet ejection nozzle head, comprising:
a plurality of electrostatic ejection type nozzles arranged at equal intervals and having the same shape, wherein
at least one first electrostatic ejection type nozzle among the plurality of electrostatic ejection type nozzles is blocked by a blocking material.

8. A liquid droplet ejection nozzle head according to claim 7, wherein
the first electrostatic ejection type nozzle is arranged between two second electrostatic ejection type nozzles which are not blocked among the plurality of electrostatic ejection type nozzles.

9. The liquid droplet ejection nozzle head according to claim 7, wherein
the blocking material includes a non-polar solvent.

10. The liquid droplet ejection nozzle head according to claim 7, wherein
the blocking material is a resist.

11. The liquid droplet ejection nozzle head according to claim 7, wherein
the blocking material is a magnetic material.

12. A liquid droplet ejection method, the method comprising:
blocking a first liquid droplet ejection nozzle arranged in a first region of a multi-nozzle head including a plurality of first liquid droplet ejection nozzles; and
ejecting first droplets from a first liquid droplet ejection nozzle arranged in a second region different from the first region of the plurality of first liquid droplet ejection nozzles to an object, wherein
the first liquid droplet ejection nozzle is an electrostatic ejection type nozzle.

13. The liquid droplet ejection method according to claim 12, further comprising:
using the second liquid droplet to block the first liquid droplet ejection nozzle provided in the first region among the plurality of first liquid droplet ejection nozzles by ejecting a second droplet from a second liquid droplet ejection nozzle.

14. The liquid droplet ejection method according to claim 13, wherein
the second droplet includes a non-polar solvent.

15. The liquid droplet ejection method according to claim 13, wherein
the second droplet is a resist.

16. The liquid droplet ejection method according to claim 14, wherein
the second droplet is removed when the first liquid droplet ejection nozzle blocked by the second droplet is heated to a predetermined temperature or higher.

17. The liquid droplet ejection method according to any one of claims 13 to 16, wherein
the second liquid droplet ejection nozzle is a piezoelectric nozzle.

18. The liquid droplet ejection method according to claim 12, wherein
the first liquid droplet ejection nozzle arranged in the first region is blocked using a solid material.

19. The liquid droplet ejection method according to claim 18, wherein
the solid material is a magnetic material.

20. The liquid droplet ejection method according to claim 19, wherein
the solid material is removed by bringing the magnet closer to the blocked first liquid droplet ejection nozzle.
